# EUROPÄISCHE PATENTSCHRIFT

(11) **EP 0 536 502 B1**
(45) Veröffentlichungstag und Bekanntmachung des Hinweises auf die Patenterteilung: **15.05.1996**
(21) Anmeldenummer: 92113800.4
(22) Anmeldetag: 13.08.1992
(51) Int. Cl.: B65G 27/08

(54) **Vibrationsförderer**
Vibratory conveyor
Convoyeur à vibrations

(30) Priorität: 05.10.1991 DE 4133107
(43) Veröffentlichungstag der Anmeldung: 14.04.1993
(73) Patentinhaber: Rhein-Nadel Automation Gesellschaft mit beschränkter Haftung, D-52068 Aachen (DE)
(72) Erfinder: Grief, Norbert, W-5100 Aachen (DE)
(74) Vertreter: Rieder, Hans-Joachim, Dr.

(56) Entgegenhaltungen:
- DE-A- 3 231 947
- DE-A- 3 717 766
- DE-A- 4 138 957
- US-A- 3 845 857

## Beschreibung

Die Anmeldung betrifft einen Vibrationsförderer mit von Federn eines Grundgestells getragener Werkstück-Führungsbahn und einem die Werkstück-Führungsbahn bewegenden Vibrationsantrieb.

Eine Vorrichtung dieser Art ist beispielsweise aus der EP-A-0 136 446 bekannt, wobei dieser Vibrationsförderer eine Fixlänge der Werkstück-Führungsbahn aufweist. Zur Variierung der Werkstück-Führungsbahn wird diese in abgestuften Fixlängen angeboten. Somit müssen die Zufuhrstrecken immer nach den vorhandenen Förderern ausgelegt werden. Sonderkonstruktionen, die vom Anwender gefertigt werden, sind kaum bzw. nicht funktionssicher handhabbar. Des weiteren weist dieser Vibrationsförderer ein fest mit dem Grundgestell verbundenes Kontergewicht auf. Dieses Kontergewicht ist erforderlich, um die Laufrichtung, das Schienengewicht, den Schienenüberstand und den Gleichlauf zu beeinflussen. Je nach Schwere der Werkstück-Führungsbahn oder Länge des Schienenüberstandes wird das Kontergewicht ausgelegt.

Aufgabe der vorliegenden Erfindung ist es, einen gattungsgemäßen Förderer so auszugestalten, daß er mit gleichen Grundteilen einen variablen Aufbau gestattet, eingeschlossen die günstigen Voraussetzungen für ein Abschneiden der Förderbahn auf vorbestimmte Längen.

Gelöst ist diese Aufgabe durch die im Anspruch 1 angegebene Erfindung.

Die Unteransprüche sind vorteilhafte Weiterbildungen des Erfindungsgegenstandes.

Als Folge dieser Ausgestaltung ist ein gattungsgemäßer Vibrationsförderer erhöhten Gebrauchswertes geschaffen. Hierbei sind die für die Länge des Vibrationsförderers wesentlichen Komponenten, wie die als Schwinger dienenden Winkelschienen und die Werkstück-Führungsbahn, aus Profilen hergestellt. Die parallel zueinander verlaufenden Winkelschienen sind an ihren einen Schenkeln mit den Schwingungsenden der Federn des Grundgestelles verbunden, wobei die anderen Schenkel der Winkelschienen die Werkstück-Führungsbahn über einzelne Spannstücke trägt. Diese sind in formschlüssigem Eingriff und in Längsrichtung durch Verspannung lagenpositioniert in den hinterschnittenen Freiräumen der parallel zur Werkstück-Führungsbahn gerichteten Schenkel angeordnet. Diese Ausbildung erlaubt ein Ablängen der Werkstück-Führungsbahn und der Winkelschienen, den jeweiligen Bedürfnissen entsprechend. Sinn dieser Maßnahme ist es, die als Schwinger ausgebildeten Winkelschienen so lang wie möglich zu gestalten, damit die angeschraubte Werkstück-Führungsbahn so wenig wie nötig übersteht. Ein Überstand der Werkstück-Führungsbahn kann je nach Steifigkeit bzw. Instabilität zu Störungen des Gleichlaufes bei der Teilezuführung führen. Im ungünstigsten Fall hat dies einen Stillstand oder sogar einen Rücklauf der Zufuhrteile innerhalb der angeschraubten Werkstück-Führungsbahn zur Folge. Als Vorteil erweist sich hierbei die Befestigung der Werkstück-Führungsbahn über einzelne Spannstücke an die Winkelschienen. Diese Spannstücke sind in Längsrichtung der Winkelschienen versetzbar, so daß unabhängig von der Länge der Werkstück-Führungsbahn immer jeweils ein Spannstück im Bereich der Enden der Werkstück-Führungsbahn angeordnet werden kann. Die Ausbildung des Schwingers als Winkelprofile erlaubt eine variable Montage des Schwingers zur Ausbildung einer schmalen oder breiten Bauform des Vibrationsförderers. Eine schmale Bauform ist erforderlich, wenn das Platzangebot z. B. an Montagemaschinen im Übergabebereich sehr gering ist. Bei mehrbahnigen oder querschnittsgrößeren Zuführungen ist eine breite Bauform erforderlich, wobei das Schwingerprofil nicht an Steifigkeit verliert. Vorteilhafter Weise sind die parallel zur Werkstück-Führungsbahn verlaufenden Schenkel der Winkelschienen als C-Profile mit nach oben offenem C-Schlitz gestaltet. In diesem C-Schlitz liegen die einzelnen Spannstücke ein, wobei die einzelnen auf gleicher Querschnittsebene liegenden Spannstücke durch brückenförmig angeordnete Füße der Werkstück-Führungsbahn verbunden sind. Hinsichtlich dieser Ausgestaltung ist eine variable Anordnung der Spannstücke gegeben, wobei diese mittels der brückenförmig angeordneten Füße durch Verspannung in den C-Schlitzen lagenpositioniert sind. Die Befestigung der Werkstück-Führungsbahn erfolgt hierbei beispielsweise mittels einer Verschraubung an die Füße. Die der Feder zugeordneten Schenkel der Winkelschienen sind auf ganzer Länge mit Lochreihen für die Feder-Befestigungsbolzen ausgestattet, zur variablen Anordnung der Winkelschienen an die Feder. Vorteilhafter Weise kann jeder Schenkel mehrere übereinanderliegende Lochreihen tragen. Die Feder-Befestigungsbolzen treten in an der Feder sitzenden Buchsen ein, die als Distanzbuchsen der Schenkel der Winkelschienen gestaltet sind. Der mittels dieser Distanzbuchsen erzielte Freiraum zwischen den Schenkeln der Winkelschienen dient als Aufnahme eines Distanzstückes, welches an den Schenkeln der Winkelschienen befestigt ist. An diesem Distanzstück ist das Schwingteil des Vibrationsmotors angeordnet.

Eine vorteilhafte Weiterbildung des Vibrationsförderers zeigt die Anordnung eines an dem Stirnende des Grundgestells in Höhenrichtung verlagerbaren Kontergewichtes. Durch Auf- bzw. Abwärtsverschieben des Kontergewichtes wird der optimale Massenschwerpunkt bestimmt. Diese Optimierung des Massenschwerpunktes ist erforderlich, um das zu fördernde Teil für die gesamte Länge der Werkstück-Führungsbahn gleichmäßig zu transportieren. Es ist auch denkbar, das Kontergewicht zusätzlich zur Höhenverstellung auch drehbar auszugestalten. Dies ist durch eine Stütz/Spannzapfen-Halterung realisiert. Zur Optimierung der Einstellbarkeit des Kontergewichts ist vorgesehen, dieses aus mehreren unabhängig voneinander verlager- und verspannbaren Einzelgewichten zusammenzusetzen, wobei die Einzelgewichte als übereinander geschichtete und deckungsgleiche Platten ausgebildet sind.

Weitere Vorteile und Einzelheiten der Erfindung sind nachstehend anhand zweier zeichnerisch veranschaulichter Ausführungsbeispiele näher erläutert. Es zeigt:
- Fig. 1: einen erfindungsgemäßen Vibrationsförderer in Seitenansicht,
- Fig. 2: eine der Fig. 1 entsprechende Darstellung bei abgenommenem Schwinger,
- Fig. 3: den Schnitt gemäß der Linie III-III in Fig. 1, gemäß einer ersten Ausführungsform,
- Fig. 4: eine der Fig. 3 entsprechende Darstellung, jedoch eine zweite Ausführungsform betreffend,
- Fig. 5: eine Stirnansicht auf den Vibrationsförderer zur Darstellung der Anordnung eines Kontergewichtes,
- Fig. 6: eine perspektivische Explosionsdarstellung einer Werkstück-Führungsbahn, einer als Gegenmasse ausgebildeten Befestigungsschiene, eines aus zwei Winkelschienen zusammensetzbaren Schwingers und der Elemente zur Befestigung der Werkstück-Führungsbahn bzw. der Befestigungsschiene an den Schwinger,
- Fig. 7: eine perspektivische Darstellung des sich aus den Befestigungselementen und den Winkelschienen zusammensetzenden Schwingers in ursprünglicher Länge und
- Fig. 8: eine perspektivische Darstellung der gesamten Vorrichtung, wobei der Schwinger, die Befestigungsschiene und die Werkstück-Führungsbahn auf ein erforderliches Maß gekürzt sind.

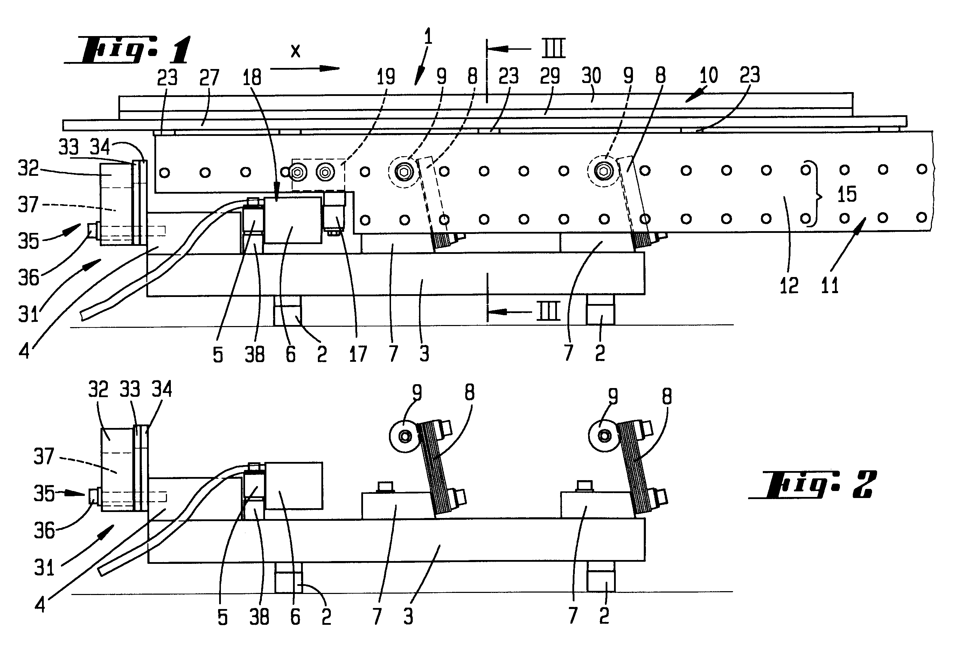

Der in den Fig. 1 und 2 gezeigte Vibrationsförderer 1 besitzt ein auf vier elastischen Puffern 2 stehendes rechteckförmiges Grundgestell 3, an dem einerends eine Konsole 4 angeordnet ist. Dieser ist eine weitere Konsole 38 zur horizontalen Aufnahme eines Magnetkernes 5 und eines diesem zugeordneten Elektromagneten 6 vorgelagert. Andererends und mittig des Grundgestelles 3 weist dieses je ein Federwiderlager 7 auf. Diese Federwiderlager 7 dienen als Halterungen für als Federpakete ausgebildete Federn 8, die im Bereich ihres einen Endes mit den Federwiderlagern 7 verschraubt sind. Im Bereich ihres anderen Endes weisen die Federn 8 jeweils eine Distanzbuchse 9 auf. Diese Distanzbuchsen 9 sind ebenfalls mit der jeweiligen Feder 8 verschraubt. Die parallel zum Grundgestell 3 schwingenden und die erforderliche Rückstellkraft des Vibrationsförderers 1 bewirkenden Federn 8 stellen eine federnde Verbindung zwischen dem Grundgestell 3 und einem eine Werkstück-Führungsbahn 10 tragenden Schwinger 11 her, indem sie einerseits mit dem Grundgestell 3 und andererseits mit dem Schwinger 11 mittels der Distanzbuchsen 9 verbunden sind.

Zur Ausbildung von längeren Ausführungen des Vibrationsförderers 1 kann dieser auch mit mehr als den in den Zeichnungen dargestellten zwei Federpaketen versehen werden.

Der Schwinger 11 setzt sich aus zwei parallel zueinander ausgerichteten Winkelschienen 12 zusammen. Diese Winkelschienen 12 sind L-förmig ausgebildet, wobei jeweils ein Schenkel als C-Profil 13 und der jeweils andere als Montageschenkel 14 gestaltet ist. Die Montageschenkel 14 sind auf ganzer Länge mit zwei Lochreihen 15 zur Aufnahme von Feder-Befestigungsbolzen 16 ausgestattet. Mittels dieser Feder-Befestigungsbolzen 16 wird die federnde Verbindung zwischen dem Grundgestell 3 und dem Schwinger 11 mittels der Federn 8 hergestellt, wobei die Distanzbuchsen 9 den Abstand zwischen den Winkelschienen 12 festlegen. Die Federn 8 werden mittels der Feder-Befestigungsbolzen 16 mit den Winkelschienen 12 derart verbunden, daß der somit gebildete Schwinger 11 parallel zum Grundgestell 3 ausgerichtet ist. Die zwei eine Mehrzahl an Befestigungslöchern aufweisenden Lochreihen 15 der Montageschenkel 14 bieten eine Variabilität der Zuordnung des Schwingers 11 zum Grundgestell 3. Das Schwingteil 17 des Vibrationsmotors 18 ist an einem zwischen den Montageschenkeln 14 befestigten Distanzstück 19 derart angeordnet, daß sich das Schwingteil 17 etwa in Höhe der Federschwingungsebene befindet. Das Querschnittsmaß des Schwingteiles 17 entspricht demjenigen des Magnetkernes 5.

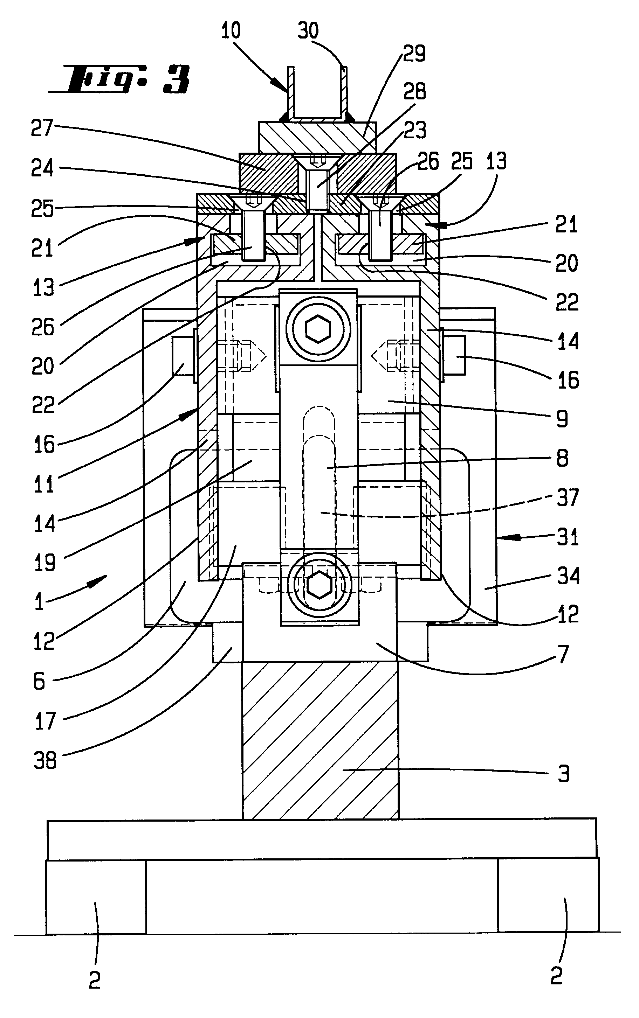

In dem in Fig. 3 dargestellten Ausführungsbeispiel sind die Winkelschienen 12 derart angeordnet, daß sich die C-Profile 13 gegenüberliegen. Die C-Profile 13 weisen nach oben offene C-Schlitze 20 zur Aufnahme von Spannstücken 21 auf. Diese Spannstücke 21 sind in etwa quadratisch ausgebildet und mittig mit einer Gewindebohrung 22 versehen. Auf der Oberfläche der Winkelschienen 12 sind mehrere in nahezu gleichmäßigem Abstand zueinander ausgerichtete, sich quer zur Längserstreckung der Winkelschienen 12 verlaufende Füße 23 angeordnet, wobei die Länge der Füße 23 der Breite des Schwingers 11 entspricht. Die Füße 23 weisen mittig eine Gewindebohrung 24 und seitlich zu dieser je eine Schraubendurchtrittsöffnung 25 auf. Mittels Schrauben 26, die durch die Schraubendurchtrittsöffnung 25 hindurch in die Gewindebohrung 22 der Spannstücke 21 eintreten, werden die Spannstücke 21 in den C-Profilen 13 der Winkelschienen 12 verspannt. Es ist somit eine starre Verbindung zwischen den beiden Winkelschienen 12 erzielt, wobei die aus den Spannstücken 21 und den Füßen 23 bestehenden Verspannvorrichtungen beliebig entlang des C-Profils 13 angeordnet werden können.

Neben der Befestigung der Winkelschienen 12 untereinander dienen die Füße 23 zur Montage einer als Adapterplatte ausgebildeten Befestigungsschiene 27. Diese ist mittels Schrauben 28, die in die Befestigungsbohrung 24 der Füße 23 eintreten, mit dem Schwinger 11 verbunden.

Die Befestigungsschiene 27 trägt oberseitig mittig über eine nicht dargestellte Verschraubung die Werkstück-Führungsbahn 10. Diese setzt sich aus einem Zwischenträger 29 und einem an diesem angeschweißten U-Profil 30 zusammen.

Die Befestigung der Werkstück-Führungsbahn 10 über die Spannvorrichtungen an den die C-Profile 13 aufweisenden Schwinger 11 bietet nunmehr die Möglichkeit, sowohl den Schwinger 11 als auch die Werkstück-Führungsbahn 10 den Bedürfnissen nach anzupassen. Dies beinhaltet auch ein Verkürzen von Werkstück-Führungsbahn 10 und Schwinger 11. Die Spannvorrichtungen sind jeweils so zu positionieren, daß eine optimale Verbindung zwischen den einzelnen Teilen besteht. Des weiteren ist durch diese Ausbildung eine Verstellung der Werkstück-Führungsbahn 10 entlang der Längserstreckung des Schwingers 11 ermöglicht.

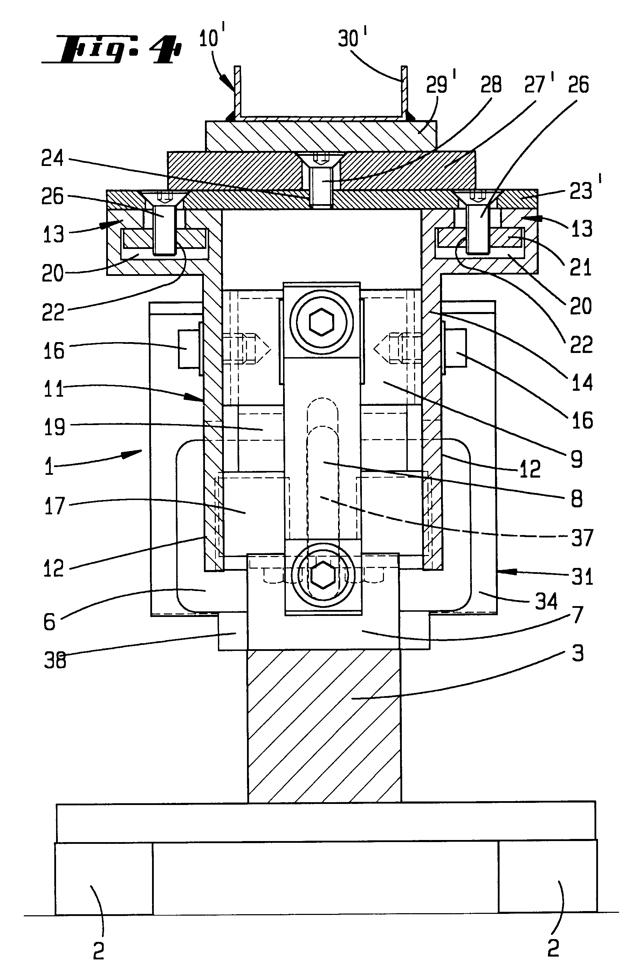

Bei mehrbahnigen Zuführungen oder bei einer breiteren Werkstück-Führungsbahn 10' sind die Winkelschienen 12 derart den Federn 8 zuzuordnen, daß die C-Profile 13 voneinander abweisen. Dies ist in dem zweiten Ausführungsbeispiel in Fig. 4 gezeigt. Durch die Verwendung von entsprechend längeren Füßen 23' ist somit eine breitere Auflagefläche für eine entsprechend breiter ausgebildete, die sich aus U-Profil 30' und Zwischenträger 29' zusammensetzenden Werkstück-Führungsbahn 10' tragende Befestigungsschiene 27' geschaffen.

An der der Förderrichtung x abgekehrten Seite des Grundgestelles 3 ist an der Konsole 4 ein in Höhenrichtung verlagerbares Kontergewicht 31 angeordnet, welches sich aus mehreren unabhängig voneinander verlager- und verspannbaren Einzelgewichten 32 - 34 zusammensetzt. Die Befestigung des Kontergewichtes 31 an der Konsole 4 erfolgt über eine Schlitz/Spannzapfenhalterung 35, wobei ein Spannzapfen 36 Schlitze 37 der Einzelgewichte 32-34 durchdringt und in ein Gewinde der Konsole 4 eintritt. Zusätzlich zur Höhenverstellung ist das Kontergewicht 31 auch drehbar. Die Einzelgewichte 32-34 sind als übereinander geschichtete und deckungsgleiche Platten ausgebildet. Mithilfe dieser Ausgestaltung kann die erforderliche Kontermasse dem Schwingsystem angepaßt werden, wobei durch Auf- bzw. Abwärtsverschieben oder Verdrehen der Einzelgewichte 32-34 der optimale Massenschwerpunkt bestimmt ist, was dann der Fall ist, wenn das zu fördernde Teil über die gesamte Länge der Werkstück-Führungsbahn 10 gleichmäßig transportiert wird.

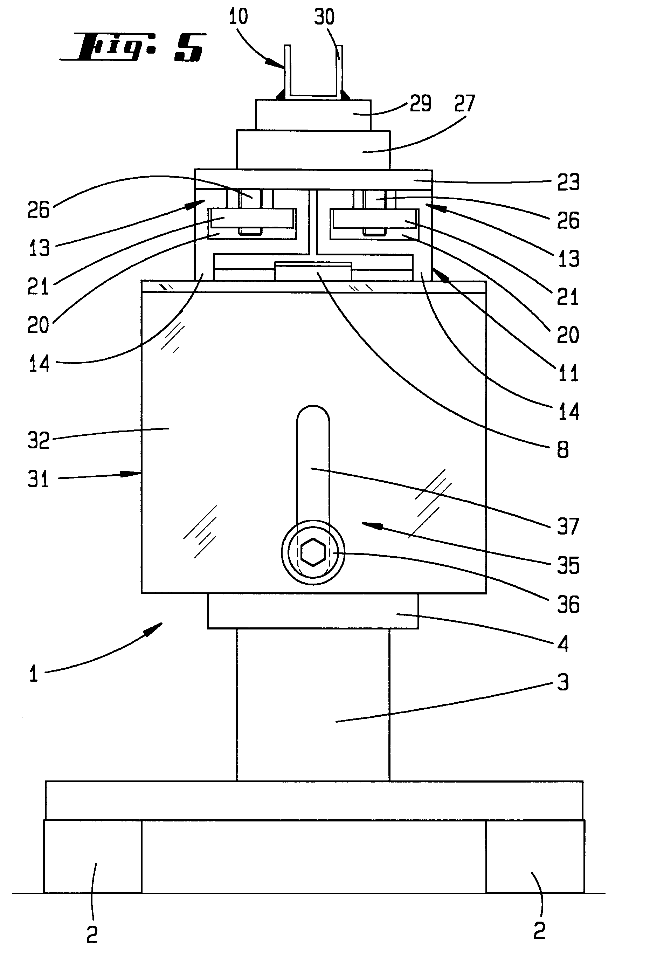

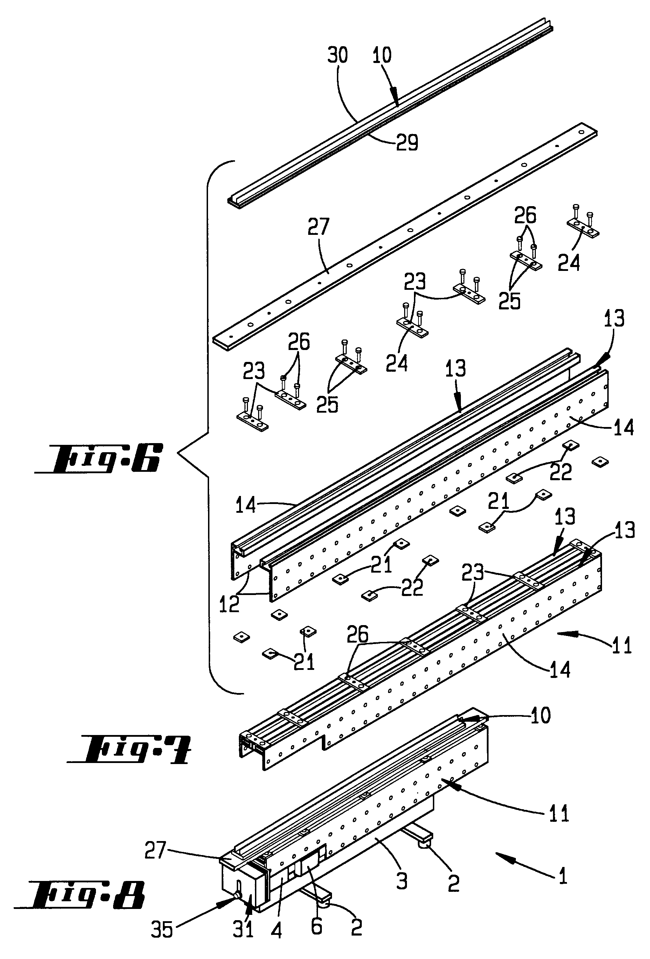

In der Fig. 6 sind die Einzelteile des Schwingers 11 und der Werkstück-Führungsbahn 10 dargestellt, wobei die Werkstück-Führungsbahn 10, die Befestigungsschiene 27 und die Winkelschienen 12 eine ursprüngliche Länge aufweisen. Sowohl der in Fig. 7 dargestellte vormontierte Schwinger 11 als auch die Befestigungsschiene 27 und die Werkstück-Führungsbahn 10 können den jeweiligen Bedürfnissen angepaßt werden. Durch die Längsverstellbarkeit der Spannvorrichtungen ist bei jeder Länge eine optimale Anbindung der Werkstück-Führungsbahn 10 an das C-Profil 13 gewährleistet. Fig. 8 zeigt einen Vibrationsförderer 1 mit gekürzten Profilen.

## Patentansprüche

1. Vibrationsförderer (1) mit von Federn (8) eines Grundgestells (3) getragener Werkstück-Führungsbahn (10) und einem die Werkstück-Führungsbahn (10) bewegenden Vibrationsantrieb (18), dadurch gekennzeichnet, daß die Schwingungsenden der Federn (8) mit den Schenkeln (14) zweier parallel laufender Profilschienen verbunden sind, deren parallel zur Werkstück-Führungsbahn (10) gerichtete Schenkel die Werkstück-Führungsbahn (10) tragen.

2. Vibrationsförderer nach Anspruch 1, dadurch gekennzeichnet, daß die parallel zur Werkstück-Führungsbahn (10) gerichteten Schenkel (x) über einzelne Spannstücke (21) aufnehmen, die in formschlüssigen Eingriff und in Längsrichtung durch Verspannung lagenpositionierbar in den hinterschnittenen Freiräumen dieser Schenkel angeordnet sind.

3. Vibrationsförderer nach einem oder mehreren der vorhergehenden Ansprüche, dadurch gekennzeichnet, daß der parallel zur Werkstück-Führungsbahn (10) verlaufende Schenkel als C-Profil (13) gestaltet ist mit nach oben offenem C-Schlitz (20).

4. Vibrationsförderer nach einem oder mehreren der vorhergehenden Ansprüche, dadurch gekennzeichnet, daß die einzelnen auf gleicher Querschnittsebene liegenden Spannstücke (21) durch brückenförmig angeordnete Füße (23) der Werkstück-Führungsbahn (10) verbunden sind.

5. Vibrationsförderer nach einem oder mehreren der vorhergehenden Ansprüche, dadurch gekennzeichnet, daß die der Feder(8) zugeordneten Schenkel (14) der Winkelschiene (12) auf ganzer Länge mit Lochreihen (15) für die Feder-Befestigungsbolzen (16) ausgestattet sind.

6. Vibrationsförderer nach einem oder mehreren der vorhergehenden Ansprüche, dadurch gekennzeichnet, daß jeder Schenkel (14) mehrere übereinanderliegende Lochreihen (15) trägt.

7. Vibrationsförderer nach einem oder mehreren der vorhergehenden Ansprüche, dadurch gekennzeichnet, daß die Feder-Befestigungsbolzen (16) in an der Feder (8) sitzenden Buchsen eintreten, die als Distanzbuchsen (9) der Schenkel (14) der Winkelschienen (12) gestalten sind.

8. Vibrationsförderer nach einem oder mehreren der vorhergehenden Ansprüche, dadurch gekennzeichnet, daß das Schwingteil (17) des Vibrationsantriebs (18) an einem zwischen den den Federn (8) zugeordneten Schenkeln (14) der Winkelschiene (12) befestigten Distanzstück (19) angeordnet ist.

9. Vibrationsförderer (1) nach Anspruch 1, dadurch gekennzeichnet, daß dem Stirnende des Grundgestells (3) ein in Höhenrichtung verlagerbares Kontergewicht (31) angeordnet ist.

10. Vibrationsförderer nach Anspruch 9, gekennzeichnet durch eine Schlitz/Spannzapfenhalterung (35) des zusätzlich zur Höhenverstellung drehbaren Kontergewichtes (31).

11. Vibrationsförderer nach den Ansprüchen 9 und 10, dadurch gekennzeichnet, daß das Kontergewicht (31) sich aus mehreren unabhängig voneinander verlager- und verspannbaren Einzelgewichten (32-34) zusammensetzt.

12. Vibrationsförderer nach den Ansprüchen 9-11, dadurch gekennzeichnet, daß die Einzelgewichte (32-34) als übereinandergeschichtete und deckungsgleiche Platten ausgebildet sind.

## Claims

1. Vibratory conveyor (1) with a workpiece guide track (10) carried by springs (8) of a main frame (3) and with a vibratory drive (18) which moves the workpiece guide track (10), characterised in that the oscillation ends of the springs (8) are connected to the arms (14) of two parallel profile rails, of which the arms oriented parallel to the workpiece guide track (10) carry the workpiece guide track (10).

2. Vibratory conveyor according to claim 1, characterised in that the arms (x) oriented parallel to the workpiece guide track (10) receive the workpiece guide track by individual clamping pieces (21) which are arranged in the undercut free spaces of these arms so that they can be positioned in form-locking engagement and in the longitudinal direction by fixing.

3. Vibratory conveyor according to one or more of the preceding claims, characterised in that the arm extending parallel to the workpiece guide track (10) is designed as a C profile (13) with a C slot (20) open at the top.

4. Vibratory conveyor according to one or more of the preceding claims, characterised in that the individual clamping pieces (21) located in the same cross-sectional plane are connected by feet (23) of the workpiece guide track (10) arranged in bridge-like fashion.

5. Vibratory conveyor according to one or more of the preceding claims, characterised in that the arms (14) of the angle rail (12) associated with the spring (8) are provided over their whole length with rows of holes (15) for the spring fixing bolts (16).

6. Vibratory conveyor according to one or more of the preceding claims, characterised in that each arm (14) carries several rows of holes (15) located one above the other.

7. Vibratory conveyor according to one or more of the preceding claims, characterised in that the spring fixing bolts (16) enter bushes which are mounted on the spring (8) and which are designed as distance bushes (9) of the arms (14) of the angle rails (12).

8. Vibratory conveyor according to one or more of the preceding claims, characterised in that the oscillating part (17) of the vibratory drive (18) is arranged on a distance piece (19) mounted between the arms (14) of the angle rail (12) associated with the springs (8).

9. Vibratory conveyor (1) according to claim 1, characterised in that at the front end of the main frame (3) is arranged a counterweight (31) displaceable in a vertical direction.

10. Vibratory conveyor according to claim 9, characterised by a mortise and tenon mounting (35) for the counterweight (31) which is rotatable in addition to vertical displacement.

11. Vibratory conveyor according to claims 9 and 10, characterised in that the counterweight (31) is composed of several individual weights (32-34) which can be displaced and fixed independently of each other.

12. Vibratory conveyor according to claims 9-11, characterised in that the individual weights (32-34) are designed as superimposed congruent plates.

## Revendications

1. Convoyeur à vibrations (1) muni d'un chemin de guidage de pièces (10) porté par des ressorts (8) d'un châssis de base (3) et d'un organe d'entraînement à vibrations (18) déplaçant le chemin de guidage de pièces (10), caractérisé en ce que les extrémités vibrantes des ressorts (8) sont reliées aux branches (14) de deux rails mobiles courant parallèlement, et en ce que les branches orientées parallèlement au chemin de guidage de pièces (10) portent le chemin de guidage de pièces (10).

2. Convoyeur à vibrations selon la revendication 1, caractérisé en ce que les branches orientées parallèlement (x) au chemin de guidage de pièces (10), sont retenues par des pièces individuelles de serrage (21) qui, étant susceptibles d'être positionnées par serrage en contact par liaison de forme et en direction longitudinale, sont disposées dans les espaces libres en contre-dépouille de ces branches.

3. Convoyeur à vibrations selon l'une ou plusieurs des revendications précédentes, caractérisé en ce que la branche courant parallèlement au chemin de guidage de pièces (10) est réalisée sous forme de profilé en C (13) présentant une fente en C (20) ouverte vers le haut.

4. Convoyeur à vibrations selon l'une ou plusieurs des revendications précédentes, caractérisé en ce que les pièces individuelles de serrage (21) situées sur le même plan de section transversale, sont reliées par des pieds (23) disposés en forme de pont du chemin de guidage de pièces (10).

5. Convoyeur à vibrations selon l'une ou plusieurs des revendications précédentes, caractérisé en ce que les branches (14) des rails en cornière (12) qui sont associées aux ressorts (8), sont équipées sur toute leur longueur de rangées de trous (15) pour les boulons de fixation de ressort (16).

6. Convoyeur à vibrations selon l'une ou plusieurs des revendications précédentes, caractérisé en ce que chaque branche (14) porte plusieurs rangées de trous (15) disposées les unes au-dessus des autres.

7. Convoyeur à vibrations selon l'une ou plusieurs des revendications précédentes, caractérisé en ce que les boulons de fixation de ressort (16) pénètrent dans des manchons posés sur les ressorts (8) et qui sont réalisés sous la forme de manchons d'écartement (9) des branches (14) des rails en cornière (12).

8. Convoyeur à vibrations selon l'une ou plusieurs des revendications précédentes, caractérisé en ce que la pièce de pivotement alterné (17) de l'organe d'entraînement à vibrations (18) est disposée sur une pièce d'écartement (19) fixée entre les branches (14) associées aux ressorts (8) des rails en cornière (12).

9. Convoyeur à vibrations (1), selon la revendication 1, caractérisé en ce que à l'extrémité frontale du châssis de base (3), est monté un contrepoids (31) susceptible de se déplacer dans la direction verticale.

10. Convoyeur à vibrations selon la revendication 9, caractérisé par un organe de retenue à fente/boulon de serrage (35) du contrepoids (31) qui, en plus du déplacement en hauteur, est susceptible de tourner.

11. Convoyeur à vibrations selon les revendications 9 et 10, caractérisé en ce que le contrepoids (31) se compose de l'assemblage de plusieurs contrepoids individuels (32 à 34) susceptibles d'être déplacés et d'être serrés indépendamment l'un de l'autre.

12. Convoyeur à vibrations selon les revendications 9 à 11, caractérisé en ce que les contrepoids individuels (32 à 34) sont constitués de plaques appliquées en couche et en recouvrement sensiblement exact les unes sur les autres.
